# EUROPÄISCHE PATENTSCHRIFT

(11) **EP 1 582 763 B1**
(45) Veröffentlichungstag und Bekanntmachung des Hinweises auf die Patenterteilung: **06.08.2008**
(21) Anmeldenummer: 05102095.6
(22) Anmeldetag: 17.03.2005
(51) Int. Cl.: F16D 65/14, B60T 17/08

(54) **Fremdkraft-Feststellbremse**
Power-assisted parking brake
Frein de stationnement assisté

(30) Priorität: 03.04.2004 DE 102004016511
(43) Veröffentlichungstag der Anmeldung: 05.10.2005
(73) Patentinhaber: ROBERT BOSCH GMBH, 70442 Stuttgart (DE)
(72) Erfinder: Haffelder, Joerg, 74906, Bad Rappenau (DE); Blattert, Dieter, 74366, Kirchheim/Neckar (DE); Hertlein, Guenther, 71691, Freiberg Am Neckar (DE); Zoeller, Alexander, 71706, Markgroeningen (DE)

(56) Entgegenhaltungen:
- WO-A-20/04027282
- WO-A-20/04113756

## Beschreibung

### Stand der Technik

Die Erfindung betrifft eine Fremdkraft-Feststellbremse mit den Merkmalen des Oberbegriffs des Anspruchs 1, die insbesondere als Radbremse für ein Fahrzeugrad eines Kraftfahrzeuges vorgesehen ist.

Als Feststellbremsen werden vielfach Betriebsbremsen verwendet, die mit einer Feststelleinrichtung zu einer Feststellbremse weitergebildet sind. Mit der Feststelleinrichtung lässt sich die Bremse in betätigtem Zustand feststellen, d.h. sie hält eine aufgebrachte Bremskraft energielos aufrecht. Die Feststelleinrichtung kann beispielsweise als Verriegelungsmechanismus ausgebildet sein, der die Bremse in betätigtem Zustand mechanisch verriegelt. Die Fremdenergiebetätigung der Bremse erfolgt beispielsweise mit einem Druckmittel (pneumatisch oder hydraulisch) oder elektromechanisch. Die Feststelleinrichtung kann beispielsweise ebenfalls Druckmittel- oder elektromechanisch betätigbar sein.

Derartige Fremdkraft-Feststellbremsen finden beispielsweise als sog. automatische Parkbremsen in Fremdkraft-Bremsanlagen Verwendung, wo auf Knopfdruck die Bremse durch Fremdenergie betätigt und in betätigtem Zustand festgestellt wird, so dass die aufgebaute Bremskraft auch bei energieloser Bremse erhalten bleibt. Die Betätigung der Feststellbremse erfolgt automatisch ohne Muskelkraft. Selbstverständlich kann die Feststellbremse auch als Betriebsbremse verwendet werden, indem sie bei einer Betriebsbremsung nicht festgestellt wird.

Zur Übertragung elektrischer Energie bei elektromechanisch betätigten Bremsen und/oder zur Übertragung elektrischer Signale beispielsweise zum Steuern von Magnetventilen hydraulischer Fremdkraftbremsen werden elektrische Stecker verwendet. Der Begriff Stecker soll hier in weitem Sinne verstanden werden als lösbare Einrichtung zur Übertragung elektrischer Energie und/oder eines oder mehrerer elektrischer Signale.

Zur Erfüllung gesetzlicher Vorgaben sind Feststellbremsen mit einer Notlöseeinrichtung bekannt, mit der die Feststelleinrichtung von Hand, eventuell unter Zuhilfenahme eines Werkzeugs, jedoch ohne Fremdenergie, lösbar ist. Dadurch lässt sich die Feststellbremse, wenn sie in betätigtem Zustand festgestellt ist, bei Stromausfall (entladene Bordbatterie) oder Pneumatik- oder Hydraulikausfall lösen, um ein mit der Feststellbremse ausgerüstetes und abgestelltes Fahrzeug bewegen zu können. Ein Problem dabei ist, dass eine Elektronik, die die Betätigung der Bremse und/oder ihrer Feststelleinrichtung steuert oder regelt, nicht erkennt, wenn die Notlöseeinrichtung zum Lösen der Feststelleinrichtung benutzt worden ist. Auch ist für die Elektronik nicht erkennbar, ob die Notlöseeinrichtung nach einer Benutzung wieder in ihre Ausgangsstellung zurückgestellt worden ist, d.h. ob die Feststelleinrichtung nutzbar ist.

### Erläuterung und Vorteile der Erfindung

Die erfindungsgemäße Fremdkraft-Feststellbremse mit den Merkmalen des Anspruchs 1 weist einen elektrischen Stecker auf, der so ausgebildet und angeordnet ist, dass eine Betätigung der Notlöseeinrichtung nur möglich ist, wenn der Stecker ausgesteckt ist. Ein Lösen der Feststelleinrichtung von Hand ist also nur möglich, wenn zuvor der Stecker abgezogen wird. Durch das Abziehen des Steckers werden elektrische Verbindungen unterbrochen, was durch die Elektronik, die die Feststellbremse steuert oder regelt, erkennbar ist und teilweise ohnehin überwacht wird. Es kann ein beispielsweise optisches Signal ausgegeben werden, das einen Fahrer daran erinnert, dass der elektrische Stecker an der Feststellbremse nach Lösen der Feststelleinrichtung oder Reparatur der Feststellbremse wieder eingesteckt werden muss. Um den elektrischen Stecker wieder einstecken zu können muss zuvor die Notlöseeinrichtung in ihre Ausgangsstellung zurückgestellt werden. Die Erfindung hat somit den Vorteil, dass sie an das Rückstellen der Notlöseeinrichtung erinnert und dass nicht unwissentlich mit betätigter Notlöseeinrichtung, d.h. mit nicht wirkender Feststelleinrichtung gefahren wird. Weiterer Vorteil ist, dass die Erfindung kostengünstig durch konstruktive Maßnahmen verwirklicht werden kann, es ist keine Zusatzsensorik erforderlich. Wegen der nicht erforderlichen Zusatzsensorik wird eine Fehlerwahrscheinlichkeit der Feststellbremse durch die Erfindung nicht erhöht. Ist die Notlöseeinrichtung von der Feststellbremse abnehmbar und wird die Notlöseeinrichtung nur zum Lösen der Feststelleinrichtung im Fehlerfall an der Feststellbremse angebracht, so kann erfindungsgemäß der Stecker so ausgebildet und angeordnet sein, dass er das Ansetzen der Notlöseeinrichtung an der Feststellbremse verhindert, wenn er eingesteckt ist.

Die Unteransprüche haben vorteilhafte Ausgestaltungen und Weiterbildungen der im Anspruch 1 angegebenen Erfindung zum Gegenstand.

### Zeichnung

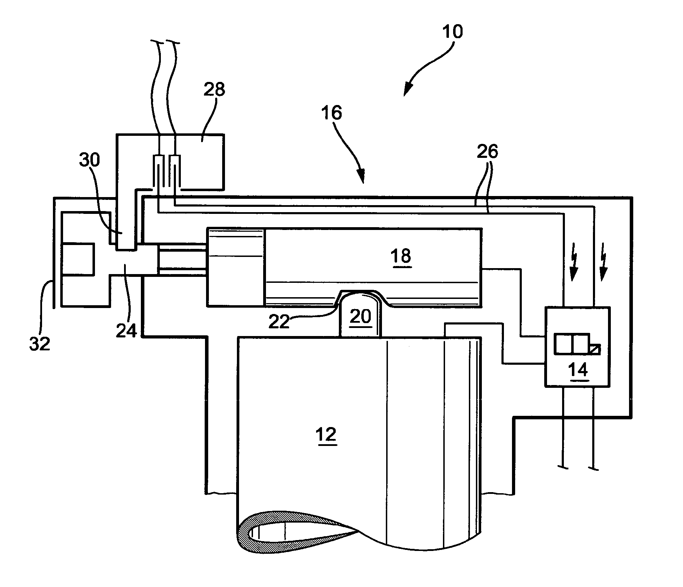

Die Erfindung wird nachfolgend anhand eines in der Zeichnung dargestellten Ausführungsbeispiels näher erläutert. Die einzige Figur zeigt eine erfindungsgemäße Fremdkraft-Feststellbremse (Radbremse) in einer vereinfachten Schemadarstellung.

### Beschreibung des Ausführungsbeispiels

Die in der Zeichnung dargestellte, erfindungsgemäße Fremdkraft-Feststellbremse 10 ist eine Radbremse für ein nicht dargestelltes Fahrzeugrad eines nicht dargestellten Kraftfahrzeugs. Die Feststellbremse 10 kann beispielsweise als hydraulische Scheibenbremse ausgeführt sein. Die Feststellbremse 10 weist einen Bremskolben 12 auf, mit dem in an sich bekannter Weise ein nicht dargestellter Reibbremsbelag an einen Bremskörper, beispielsweise eine Bremstrommel oder ein Bremsscheibe, drückbar ist. Zur Bremsbetätigung ist der Bremskolben 12 hydraulisch mit Druck aus einer nicht dargestellten Fremdenergiequelle beaufschlagbar. Als Fremdenergiequelle sind Hydropumpen mit angeschlossenem Hydrospeicher üblich. Die Steuerung oder Regelung eines den Bremskolben 12 beaufschlagenden Radbremsdrucks erfolgt mit einer in der Zeichnung symbolisch dargestellten Radbremsdruckmodulationsventilanordnung 14. Derartige Radbremsdruckmodulationsventilanordnungen 14 sind an sich bekannt und sollen, da sie nicht den eigentlichen Gegenstand der Erfindung bilden, hier nicht näher erläutert werden.

Soweit bisher erläutert handelt es sich bei der erfindungsgemäßen Feststellbremse 10 um eine Betriebsbremse beispielsweise in Bauart einer Scheibenbremse, wie sie an sich bekannt ist.

Zur Weiterbildung zu einer Feststellbremse 10 weist die Feststellbremse 10 eine Feststelleinrichtung 16 mit einem Verriegelungskolben 18 auf, der quer zum Bremskolben 12 an dessen einem Reibbremsbelag und einer Bremsscheibe abgewandten hinteren Stirnseite angeordnet ist. Der Bremskolben 12 weist einen Stößel 20 auf, der bei gelöster Feststellbremse 10 in eine Ausnehmung 22 am Umfang des Verriegelungskolbens 18 eintaucht. Zur Verwendung der Feststellbremse 10 als Parkbremse, d.h. zum Feststellen der Feststellbremse 10 in betätigter Stellung, wird die Feststellbremse 10 durch Druckbeaufschlagung des Bremskolbens 12 betätigt, wobei der Stößel 20 aus der Ausnehmung 22 des Verriegelungskolbens 18 herausbewegt wird, so dass der Verriegelungskolben 18 verschiebbar ist. Anschließend wird der Verriegelungskolben 18 quer zum Bremskolben 12 in eine Verriegelungsstellung verschoben, in der die Ausnehmung 22 des Verriegelungskolbens 18 seitlich versetzt zum Stößel 20 des Bremskolbens 12 ist. Wird der auf den Bremskolben 12 wirkende hydraulische Druck abgesenkt, stößt der Stößel 20 gegen den Umfang des Verriegelungskolbens 18 und verhindert eine Rückstellung des Bremskolbens 12. Die aufgebrachte Bremskraft wird auch bei drucklosem Bremskolben 12 aufrechterhalten. Die Verriegelungsstellung des Verriegelungskolbens 18 ist gegenüber der in der Zeichnung dargestellten Grundstellung nach links verschoben. Der Verriegelungskolben 18 wird ebenfalls fremdenergiebetätigt durch hydraulischen Druck aus der nicht dargestellten Fremdenergiequelle. Die Verschiebung des Verriegelungskolbens 24 wird ebenfalls mit Magnetventilanordnung 30 gesteuert oder geregelt. Auch dies ist an sich bekannt und braucht hier nicht erläutert werden.

Um die Feststellbremse 10 bei Stromausfall (beispielsweise entladene Bordbatterie) von Hand lösen zu können weist die Feststellbremse 10 eine Notlöseeinrichtung auf. Die Notlöseeinrichtung besteht im Wesentlichen aus einer Notlöseschraube 24, mit der der Verriegelungskolben 18 aus der Ver - riegelungsstellung in die Ausgangsstellung zurückverschiebbar ist.

Zum Steuern der Magnetventilanordnung 14 weist die Feststellbremse 10 Signalleitungen 26 auf, die über einen elektrischen Stecker 28 mit einer nicht dargestellten Steuerelektronik verbunden sind. Der Stecker 28 ist so gestaltet und angeordnet, dass er ein Drehen der Notlöseschraube 24 verhindert, wenn er eingesteckt ist, und dass er nur einsteckbar ist, wenn die Notlöseschraube 24 so zurückgedreht ist, dass sie eine Verschiebung des Verriegelungskolbens 18 in die Verriegelungsstellung nicht behindert. Zu diesem Zweck weist der Stecker 28 eine Nase 30 auf, die in eine komplementäre Ausnehmung der Notlöseschraube 34 eingreift. Eine Alternative ist eine Lasche oder Kappe 32 am Stecker 28, die einen Kopf der Notlöseschraube 24 unzugänglich abdeckt, so dass die Notlöseschraube 24 bei eingestecktem Stecker 28 ebenfalls nicht gedreht werden kann. Sofern die Notlöseschraube 24 nur in die Feststellbremse 10 eingedreht wird, wenn sie benötigt ist, verhindert der eingesteckte Stecker 28 mit der Nase 30 oder wahlweise der Kappe 32 ein Ansetzen und Eindrehen der Notlöseschraube 24 an der Feststellbremse 10. Bevor sich also der Verriegelungskolben 18 durch Drehen der Notlöseschraube 24 zum Lösen der festgestellten Feststellbremse 10 aus der Verriegelungsstellung in die Ausgangsstellung verschieben lässt, muss der Stecker 28 für die elektrischen Signalleitungen 26 abgezogen werden. Die Unterbrechung der Signalleitungen 26 durch Abziehen des Steckers 28 wird von der Steuerelektronik erkannt und beispielsweise durch ein optisches Signal gemeldet. Der Stecker 28 kann erst wieder eingesteckt werden, nachdem die Notlöseschraube 24 wieder herausgedreht worden ist, so dass der Verriegelungskolben 18 wieder in die Verriegelungsposition geschoben werden kann. Dadurch wird vermieden, dass die Notlöseschraube 24 unbeabsichtigt eingedreht bleibt und sich die Feststellbremse 10 nicht mehr feststellen lässt. Auch wird vermieden, dass ein mit der Feststellbremse 10 ausgerüstetes Kraftfahrzeug unwissentlich mit funktionsuntüchtiger Feststelleinrichtung benutzt wird, weil die Notlöseschraube 24 eingedreht und nicht mehr ausgedreht worden ist.

## Patentansprüche

1. Fremdkraft-Feststellbremse, mit einer Fremdenergie betätigbaren Bremse, mit einer Feststelleinrichtung, mit der die Bremse in betätigtem Zustand feststellbar ist und mit einer Notlöseeinrichtung, mit der die Feststelleinrichtung von Hand lösbar ist, wobei die Bremse einen elektrischen Stecker zur Übertragung elektrischer Energie und/oder elektrischer Signale aufweist, **dadurch gekennzeichnet, dass** der Stecker (28) so ausgebildet und angeordnet ist, dass er eine Betätigung der Notlöseeinrichtung verhindert, wenn er eingesteckt ist.

2. Fremdkraft-Feststellbremse nach Anspruch 1, **dadurch gekennzeichnet, dass** der Stecker (28) so ausgebildet und angeordnet ist, dass er nur eingesteckt werden kann, wenn die Notlöseeinrichtung gelöst ist.

3. Feststellbremse nach Anspruch 1, **dadurch gekennzeichnet, dass** der Stecker (28) die Notlöseeinrichtung blockiert, wenn er eingesteckt ist.

4. Feststellbremse nach Anspruch 1, **dadurch gekennzeichnet, dass** der Stecker (28) die Notlöseeinrichtung so abdeckt, dass sie für eine Betätigung unzugänglich ist, wenn der Stecker (28) eingesteckt ist.

## Claims

1. Power-assisted parking brake, having a brake which can be operated by external energy, having a locking device with which the brake can be locked in the operated state, and having an emergency release device with which the locking device can be released by hand, with the brake having an electrical connector for transmitting electrical energy and/or electrical signals, **characterized in that** the connector (28) is formed and arranged such that it prevents operation of the emergency release device when it is plugged in.

2. Power-assisted parking brake according to Claim 1, **characterized in that** the connector (28) is formed and arranged such that it can be plugged in only when the emergency release device is released.

3. Parking brake according to Claim 1, **characterized in that** the connector (28) blocks the emergency release device when it is plugged in.

4. Parking brake according to Claim 1, **characterized in that** the connector (28) covers the emergency release device such that the said emergency release device is inaccessible for operation purposes when the connector (28) is plugged in.

## Revendications

1. Frein de stationnement commandé par une force extérieure, comportant un frein actionné par de l'énergie extérieure, une installation de blocage qui bloque le frein en position actionnée et une installation de libération de secours qui permet de libérer l'installation de blocage à la main,
le frein ayant un connecteur électrique pour transmettre de l'énergie électrique et/ou des signaux électriques,
**caractérisé en ce que**
le connecteur (28) est réalisé et installé pour qu'il évite l'actionnement de l'installation de déclenchement de secours lorsqu'il est branché.

2. Frein de stationnement actionné par une force extérieure selon la revendication 1,
**caractérisé en ce que**
le connecteur (28) est réalisé et disposé pour qu'il ne puisse être engagé que si l'installation de libération de secours est ouverte.

3. Frein de stationnement actionné par une force extérieure selon la revendication 1,
**caractérisé en ce que**
le connecteur (28) bloque l'installation de libération de secours lorsqu'il est engagé.

4. Frein de stationnement actionné par une force extérieure selon la revendication 1,
**caractérisé en ce que**
le connecteur (28) couvre l'installation de libération de secours de façon qu'il ne soit pas accessible pour être manoeuvré lorsque le connecteur (28) est engagé.
